# EUROPÄISCHE PATENTSCHRIFT

(11) **EP 0 780 052 B1**
(45) Veröffentlichungstag und Bekanntmachung des Hinweises auf die Patenterteilung: **12.04.2000**
(21) Anmeldenummer: 96120022.7
(22) Anmeldetag: 13.12.1996
(51) Int. Cl.: A21C 11/00

(54) **Verfahren und Vorrichtung zur Herstellung von Teigteilen**
Method and device for preparing dough pieces
Procédé et appareil pour la production des morceaux de pâte

(30) Priorität: 22.12.1995 DE 19548162
(43) Veröffentlichungstag der Anmeldung: 25.06.1997
(73) Patentinhaber: Dieter Sönnichsen Maschinen-und Stahlbau GmbH, 25712 Burg (DE)
(72) Erfinder: Sönnichsen, Dieter, 25712 Burg (DE)
(74) Vertreter: Trappenberg, Hans

(56) Entgegenhaltungen:
- EP-A- 0 532 786
- WO-A-96/28979

## Beschreibung

Die Erfindung betrifft ein Verfahren und eine Vorrichtung nach Anspruch 1 und 4 zur Herstellung von Teigteilen vorbestimmter Fläche und Dickenprofil, bei welchem eine dem fertigen Teigteil entsprechende Menge Teig vorbestimmter Form auf eine mit einem Trenn- oder Gleitmittel versehene Unterlage aufgebracht wird und auf den Teig mittels eines Stempels Druck ausgeübt wird, so daß der Teig fließt, und welche Vorrichtung eine Auflageplatte und einen auf die Auflageplatte absenkbaren Stempel aufweist.

Da in der heutigen Zeit in verstärktem Maße auf fertige Gerichte zurückgegriffen wird, welche in kürzester Zeit fertig zum Verzehr sind, wird von der Industrie eine immer größer werdende Zahl unterschiedlicher Gerichte angeboten. Dabei spielen die Gerichte, welche auf einer vorgebackenen Teigunterlage angeboten werden, eine bedeutende Rolle. Bei der Herstellung dieser Gerichte wird zunächst die Teigunterlage, welche regelmäßig eine vorbestimmte Form haben muß, hergestellt.

Zur Herstellung derartiger Teigunterlagen sind unterschiedliche Verfahren bekannt. So ist es bekannt, eine Teigunterlage vorbestimmter Form aus einem kontinuierlich hergestellten Teigband auszustanzen. Man erhält hierdurch eine Teigunterlage, welche durch eine mehr oder weniger konstante Dicke gekennzeichnet ist.

Oftmals ist es jedoch erwünscht, daß die Teigunterlage ein unterschiedliches Dikkenprofil aufweist. Insbesondere ist es oftmals wünschenswert, wenn die Teigunterlage am Rand dicker ist als in der Mitte.

Wie z.B. in EP-A-0 532 786 beschrieben, kann eine derartige Teigunterlage dadurch geschaffen werden, daß eine vorbestimmte Menge Teig in eine Form eingebracht wird und in die Form ein entsprechend ausgebildeter Stempel abgesenkt wird. Hierdurch wird auf den Teig ein Druck ausgeübt, so daß er sich in der Form verteilt. Die Form ist so ausgebildet, daß die Teigunterlage am Rand dicker ist als in der Mitte.

Das durch die Pressung erzwungene Fließen des Teigs durch die gesamte Form wirkt sich jedoch nachteilig auf die Struktur des Teigs aus. So kann die Struktur des Teigs zumindest teilweise zerstört werden. Eine Zerstörung der Struktur des Teigs wirkt sich jedoch sehr nachteilig auf die Qualität des Teigs aus. Darüber hinaus läßt die Qualität des durch die Pressung erhaltenen dickeren Randes zu wünschen übrig.

Es ist Aufgabe der Erfindung, ein eingangs genanntes Verfahren und eine Vorrichtung derart auszubilden, daß eine Teigunterlage vorbestimmter Fläche hergestellt werden kann, welche ein unterschiedliches Dickenprofil und einen qualitativ hochwertigen dickeren Rand aufweist, wobei die Struktur des Teigs nahezu erhalten bleibt.

Die Lösung dieser Aufgabe ergibt sich aus den Merkmalen des kennzeichnenden Teils des Anspruchs 1 beziehungsweise 4. Vorteilhafte Weiterbildungen der Erfindung ergeben sich aus den Unteransprüchen.

Gemäß der Erfindung weist die Unterlage, bestehend aus einer Auflageplatte, zunächst eine erste Fläche auf, welche kleiner als die vorbestimmte Fläche ist, die das fertige Teigteil erhalten soll. Der Teig wird zunächst auf die Unterlage mittels eines Kernstempels mit einer ersten Fläche gepreßt. Durch den durch den Kernstempel ausgeübten Druck fließt der Teig, wodurch sich seine Oberfläche vergrößert. Nach einer vorbestimmten Fließzeit wird die Fläche des Stempels und der Auflageplatte um eine erste Stempelerweiterung beziehungsweise Plattenerweiterung vergrößert. Mittels der ersten Stempelerweiterung wird dann auf den Teig ein Preßdruck ausgeübt, so daß der Teig unter der ersten Stempelerweiterung in die dem Kernstempel abgewandte Richtung fließt, wodurch sich seine Oberfläche vergrößert. Die Stempelerweiterung der Fläche des Stempels sowie der Unterlage und die Ausübung des Preßdrucks durch die jeweilige Stempelerweiterung werden solange wiederholt, bis die Fläche des Teigs der vorbestimmten Fläche entspricht, welche das fertige Teigteil erhalten soll.

Hierdurch wird auf vorteilhafte Weise erreicht, daß der Teig ausgehend vom Bereich des Kernstempels schrittweise nach außen verdrängt wird. Der Teig fließt jeweils nur um eine kurze Strecke unter der betreffenden Stempelerweiterung, woraufhin er sich kurzzeitig entspannen kann. Durch die Verdrängung jeweils nur um eine kleine Strecke und der darauffolgenden Entspannung bleibt die Struktur des Teigs weitestgehend erhalten. Dies wirkt sich besonders günstig auf die Qualität des Teigs aus.

Besonders vorteilhaft ist, wenn die Fläche der Unterlage derart eingestellt wird, daß sie jeweils der Fläche des Stempels entspricht. Hierdurch wird in vorteilhafter Weise erreicht, daß der Teig beim Herausfließen aus dem Bereich der Stempelerweiterung keine Behinderung erfährt. Der unter der Stempelerweiterung herausgeflossene Teil des Teigs befindet sich frei in der Luft und wird nur durch seine Verbindung mit dem sich unter dem Stempel beziehungsweise der Stempelerweiterung befindlichen Teil des Teigs gehalten. Der Teig kann sich somit in alle Richtungen frei entspannen.

Zur Herstellung einer besonders ausgebildeten Teigunterlage wird bei den jeweiligen Erweiterungen ein unterschiedlicher Preßdruck für eine unterschiedliche Preßzeit auf den Teig ausgeübt. Unabhängig vom Preßdruck beziehungsweise der Preßzeit kann die Teigunterlage dadurch eine besondere Ausbildung erfahren, daß die Absenkung des Stempels auf die Unterlage auf einen Mindestabstand zwischen Stempel und Unterlage begrenzt wird. Hierdurch kann der Stempel mit hohem Druck sehr schnell auf den Teig abgesenkt werden, ohne daß die Teigunterlage zu dünn wird.

Da die Stempelerweiterungen beziehungsweise die Flächenerweiterungen der Unterlage unabhängig voneinander betrieben werden können, können durch das erfindungsgemäße Verfahren Teigteile mit einem unterschiedlichen Dickenprofil hergestellt werden. Insbesondere ergibt sich durch die schrittweise Nachaußenverdrängung des Teigs ein besonders schöner Rand, der die Form einer Wulst hat, wie sie regelmäßig nur durch Bearbeitung von Hand erreicht werden kann.

Die erfindungsgemäße Vorrichtung zur Durchführung des erfindungsgemäßen Verfahrens ist dadurch gekennzeichnet, daß der Stempel einen Kernstempel einer ersten vorbestimmten Fläche aufweist, um welchen Kernstempel herum wenigstens eine erste Stempelerweiterung angeordnet ist, welche separat auf einer Auflageplatte absenkbar ist. In vorteilhafter Weise weist die Auflageplatte eine Kernplatte vorbestimmter Fläche auf, um welche herum wenigstens eine erste Plattenerweiterung angeordnet ist. Die Plattenerweiterung kann separat absenkbar beziehungsweise anhebbar ausgebildet sein. Die Fläche der Kernplatte entspricht der Fläche des Kernstempels und die Flächen der Plattenerweiterungen entsprechen den Flächen der Stempelerweiterungen.

In vorteilhafter Weise ist der Kernstempel zylinderförmig und die Stempelerweiterung hohlzylinderförmig ausgebildet. Hierdurch können kreisrunde Teigteile hergestellt werden. Der Kernstempel beziehungsweise die Stempelerweiterungen können jedoch eine beliebige andere Form aufweisen, entsprechend der gewünschten vorbestimmten Fläche des Teigteils. Der Kernstempel und die Stempelerweiterungen können auch als Scheiben ausgebildet sein, wenn dies zweckmäßig sein sollte.

Dadurch, daß um den Kernstempel herum Stempelerweiterungen angeordnet sind, welche separat absenkbar sind, kann zunächst der Kernstempel auf die Auflageplatte abgesenkt werden und danach schrittweise dann die einzelnen Stempelerweiterungen. Die Absenkung des Kernstempels beziehungsweise der Stempelerweiterungen kann auf herkömmliche Weise geschehen. Besonders vorteilhaft geschieht dies jedoch durch einen Keil, welcher auf eine Rolle einwirkt, welche zwischen dem Keil und dem Stempel beziehungsweise den Stempelerweiterungen angeordnet ist. Wird der Keil auf die Rolle geschoben, kann dadurch die Absenkung des Stempels beziehungsweise der Stempelerweiterungen erreicht werden. Zweckmäßigerweise sind zumindest am Umfang der Stempelerweiterungen verteilt mehrere Keile mit zugehörigen Rollen angeordnet.

Die Absenkung der Kernplatte und die Absenkungen der Flächenerweiterungen können derart erfolgen, daß die Fläche der Auflageplatte jeweils der Fläche des Stempels entspricht. Der Stempel beziehungsweise die Auflageplatte können so ausgebildet sein, daß die Absenkung der jeweiligen Elemente des Stempels beziehungsweise der Auflageplatte zwangsgesteuert gleichzeitig erfolgt. Hierdurch kann auf einfache Weise sichergestellt werden, daß der Stempel und die Auflageplatte gleichzeitig auf den Teig einwirken. Das heißt, der Teig wird gleichzeitig von beiden Seiten bearbeitet. Die Absenkung beziehungsweise die Anhebung der Auflageplatte kann auf dieselbe Weise geschehen wie die Absenkung des Stempels.

Eine weitere Ausführungsform der Erfindung sieht vor, daß eine Steuerung vorgesehen ist, mittels der die Preßzeit und der Preßdruck einstellbar sind. Hierdurch kann der Teig auf unterschiedliche Weise bearbeitet werden. Es ist auf einfache Weise möglich, eine optimale Preßzeit beziehungsweise einen optimalen Preßdruck einzustellen. Die optimalen Werte lassen sich auf leichte Weise experimentell ermitteln.

Wird darüber hinaus noch eine Begrenzung vorgesehen, mittels der ein Mindestabstand zwischen dem Stempel und der Auflageplatte einstellbar ist, kann in vorteilhafter Weise unabhängig vom Preßdruck oder der Preßzeit die Dicke des Teigteils an der betreffenden Stelle eingestellt werden. Der Teig kann dann beispielsweise mit hohem Druck in kurzer Zeit auf eine gegebenenfalls relativ große Dicke zusammengepreßt werden. Dies wirkt sich ebenfalls sehr günstig auf die Struktur des Teigs aus.

Eine weitere vorteilhafte Ausführungsform der Erfindung sieht vor, daß wenigstens der Stempel Mittel aufweist, durch welche der Kernstempel und die Stempelerweiterungen rücksetzbar sind. Hierdurch kann die Absenkung des Stempels sehr einfach ausgebildet sein.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
Fig. 1 eine schematische Anordnung eines erfindungsgemäß ausgebildeten Stempels und einer erfindungsgemäß ausgebildeten Auflageplatte von der Seite, und
Fig. 2 eine schematische Anordnung eines erfindungsgemäß ausgebildeten Stempels in der Draufsicht.

Ein Stempel 1 weist einen Kernstempel 2 auf, um den herum Stempelerweiterungen 3 bis 8 angeordnet sind. Der Kernstempel 2 ist zylinderförmig ausgebildet. Die Stempelerweiterungen 3 bis 8 sind als Hohlzylinder ausgebildet.

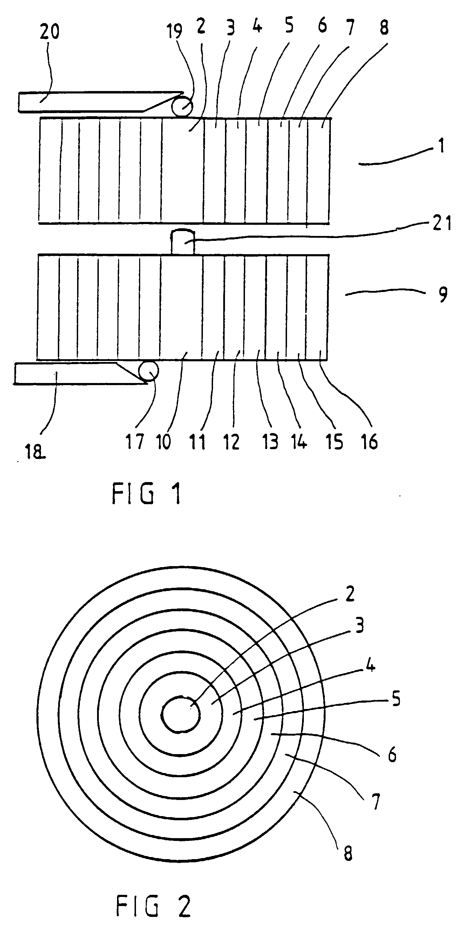

Der Kernstempel 2 weist an seiner der Auflageplatte 9 abgewandten Seite Rollen 19 auf, auf welche Keile 20 einwirken. Der Übersichtlichkeit halber ist in Fig. 1 lediglich eine Rolle 19 und ein Keil 20 dargestellt, welche auf den Kernstempel 2 einwirken. Durch Längsverschiebung des Keils 20 wird eine axiale Verschiebung des Kernstempels 2 bewirkt. Im Gegensatz zur Betätigung des Kernstempels 2, auf welchen an zentraler Stelle ein Keil 20 über eine Rolle 19 einwirkt, wirken auf die Stempelerweiterungen 3 bis 8 am Umfang verteilt drei Keile 20 über Rollen 19 ein.

Unterhalb des Stempels 1 ist eine Auflageplatte 9 angeordnet. Die Auflageplatte 9 weist eine Kernplatte 10 auf. Um die Kernplatte 10 herum sind Plattenerweiterungen 11 bis 16 angeordnet. Die Kernplatte 10 ist zylinderförmig ausgebildet. Die Plattenerweiterungen 11 bis 16 sind als Hohlzylinder ausgebildet.

An der dem Stempel 1 abgewandten Seite sind Rollen 17 angeordnet, über welche ein Keil 18 auf die Kernplatte 10 beziehungsweise die Plattenerweiterungen 11 bis 16 wirkt. Der Übersichtlichkeit halber ist in der Fig. 1 lediglich eine Rolle 17 und ein Keil 18 dargestellt, welche auf die erste Plattenerweiterung 11 einwirken. Im Gegensatz zur Betätigung der Kernplatte 10, auf welcher an zentraler Stelle ein Keil über eine Rolle einwirkt, wirken auf die Plattenerweiterungen 11 bis 16 am Umfang verteilt drei Keile 18 über Rollen 17 ein.

Eine dem fertigen Teigteil entsprechende Menge Teig 21 befindet sich auf der Kernplatte 10. Werden der Kernstempel 2 und die Kernplatte 10 abgesenkt beziehungsweise angehoben, wird auf das Teigteil 21 ein Druck ausgeübt. Der Teig fließt aus dem Raum zwischen dem Kernstempel 2 und der Kernplatte 10 heraus. Nach einer vorbestimmten Fließzeit werden die erste Stempelerweiterung 3 und die erste Plattenerweiterung 11 ebenfalls abgesenkt beziehungsweise angehoben. Hierdurch wird auf den aus dem Raum zwischen dem Kernstempel 2 und der Kernplatte 10 herausgeflossenen Teig ebenfalls ein Druck ausgeübt, so daß der Teig weiter in die dem Kernstempel 2 abgewandte Richtung fließt. Nach einer erneuten Fließzeit werden die zweite Stempelerweiterung 4 und die zweite Plattenerweiterung 12 abgesenkt beziehungsweise angehoben, wodurch der Teig weiter nach außen verdrängt wird. Dieser Vorgang wird solange wiederholt, bis der Teig seine vorbestimmte Fläche erreicht hat, wobei auf den zuletzt aus der Vorrichtung geflossenen Teig kein Druck mehr ausgeübt wird, wodurch der Rand eine schöne Wulstform erhält.

## Patentansprüche

1. Verfahren zur Herstellung von Teigteilen vorbestimmter Fläche und Dickenprofils, bei welchem eine dem fertigen Teigteil entsprechende Menge Teig auf eine Unterlage bestehend aus eines Auflageplatte (9) aufgebracht wird und auf den Teig mittels eines Stempels (1) Druck ausgeübt wird, so daß der Teig fließt,
dadurch gekennzeichnet,
daß die Auflageplatte (9) zunächst eine Kernplatte (10) mit einer ersten Fläche, welche kleiner als die vorbestimmte Fläche ist, aufweist und der Teig auf die Auflageplatte (9) mittels eines Kernstempels (2), dessen Fläche der ersten Fläche entspricht, gepreßt wird, so daß der Teig fließt und sich seine Oberfläche vergrößert,
nach einer vorbestimmten Fließzeit die Fläche des Stempels (1) sowie der Auflageplatte (9) um eine erste Stempelerweiterung (3) beziehungsweise Plattenerweiterung (11) vergrößert wird, und
mittels der ersten Stempelerweiterung (3) auf den Teig ein Preßdruck ausgeübt wird, so daß der Teig fließt und sich seine Oberfläche vergrößert, wobei
die Erweiterung der Fläche des Stempels (1) sowie die Erweiterung der Auflageplatte (9) und Ausübung des Preßdrucks solange wiederholt werden, bis die Fläche des Teiges der vorbestimmten Fläche entspricht.

2. Verfahren nach Anspruch 1,
dadurch gekennzeichnet,
daß die Preßzeit und der Preßdruck der jeweiligen Erweiterungen unterschiedlich sind.

3. Verfahren nach Anspruch 1 oder 2,
dadurch gekennzeichnet,
daß die Absenkung des Stempels (1) auf die Auflageplatte (9) auf einen Mindestabstand zwischen Stempel (1) und Auflageplatte (9) begrenzt wird.

4. Vorrichtung zur Durchführung des Verfahrens nach einem der Ansprüche 1 bis 3, mit einer Auflageplatte (9), und einem auf die Auflageplatte (9) absenkbaren Stempel (1),
der Stempel (1) einen Kernstempel (2) einer ersten vorbestimmten Fläche aufweist, um welchen Kernstempel (2) herum wenigstens eine erste Stempelerweiterung (3) angeordnet ist, welche separat absenkbar ist, dadurch gekennzeichnet, daß die Auflageplatte (9) eine Kernplatte (10) vorbestimmter Fläche aufweist, um welche Kernplatte (10) herum wenigstens eine erste Plattenerweiterung (11) angeordnet ist, welche separat anhebbar ist, wobei die Fläche der Kernplatte (10) der Fläche des Kernstempels (2) und die Flächen der Plattenerweiterungen (11 bis 16) den Flächen der Stempelerweiterungen (3 bis 8) entsprechen und wobei die Absenkung derart erfolgt, daß die Fläche der Auflageplatte (9) jeweils der Fläche des Stempels (1) entspricht.

5. Vorrichtung nach Anspruch 4,
dadurch gekennzeichnet,
daß der Kernstempel (2) zylinderförmig und die Stempelerweiterungen (3 bis 8) hohlzylinderförmig ausgebildet sind.

6. Vorrichtung nach Anspruch 4 oder 5,
dadurch gekennzeichnet,
daß eine Steuerung vorgesehen ist, mittels der die Preßzeit und der Preßdruck einstellbar sind.

7. Vorrichtung nach einem der Ansprüche 4 bis 6,
dadurch gekennzeichnet,
daß eine Begrenzung vorgesehen ist, mittels der ein Mindestabstand zwischen dem Stempel (1) und der Auflageplatte (9) einstellbar ist.

8. Vorrichtung nach einem der Ansprüche 4 bis 7,
dadurch gekennzeichnet,
daß wenigstens der Stempel (1) Mittel aufweist, durch welche der Kernstempel (2) und die Stempelerweiterungen (3 bis 8) rücksetzbar sind.

## Claims

1. A method of producing pieces of dough of a predetermined surface area and thickness profile, in which an amount of dough, which corresponds to the finished piece of dough, is disposed on a support comprising a support plate (9) and pressure is applied to the dough by means of a thrust member (1) so that the dough flows,
characterised in that
the support plate (9) firstly has a core plate (10) with a first surface area which is smaller than the predetermined surface area and the dough is pressed onto the support plate (9) by means of a core thrust member (2) whose surface area corresponds to the first surface area so that the dough flows and its surface area is increased,
after a predetermined flow time the surface area of the thrust member (1) and of the support plate (9) is increased by a first thrust member enlargement portion (3) and plate enlargement portion (11) respectively, and
a pressing force is applied to the dough by means of the first thrust member enlargement portion (3) so that the dough flows and its surface area is increased, wherein
the enlargement in the surface area of the thrust member (1) and the enlargement in the support plate (9) and application of the pressing force are repeated until the surface area of the dough corresponds to the predetermined surface area.

2. A method according to claim 1 characterised in that the pressing time and the pressing force of the respective enlargements are different.

3. A method according to claim 1 or claim 2 characterised in that the downward movement of the thrust member (1) onto the support plate (9) is limited to a minimum spacing between the thrust member (1) and the support plate (9).

4. Apparatus for carrying out the method according to one of claims 1 to 3 having a support plate (9) and a thrust member (1) which can be moved downwardly onto the support plate (9), and the thrust member (1) has a core thrust member (2) of a first predetermined surface area, around which core thrust member (2) is arranged at least one first thrust member enlargement portion (3) which can be moved downwardly separately, characterised in that the support plate (9) has a core plate (10) of predetermined surface area, around which core plate (10) is arranged at least one first plate enlargement portion (11) which can be moved upwardly separately, wherein the surface area of the core plate (10) corresponds to the surface area of the core thrust member (2) and the surface areas of the plate enlargement portions (11 to 16) correspond to the surface areas of the thrust member enlargement portions (3 to 8) and wherein the downward movement is effected in such a way that the surface area of the support plate (9) respectively corresponds to the surface area of the thrust member (1).

5. Apparatus according to claim 4 characterised in that the core thrust member (2) is of a cylindrical configuration and the thrust member enlargement portions (3 to 8) are of a hollow-cylindrical configuration.

6. Apparatus according to claim 4 or claim 5 characterised in that there is provided a control, by means of which the pressing time and the pressing force are adjustable.

7. Apparatus according to one of claims 4 to 6 characterised in that there is provided a limiting means, by way of which a minimum spacing can be set between the thrust member (1) and the support plate (9).

8. Apparatus according to one of claims 4 to 7 characterised in that at least the thrust member (1) has means by which the core thrust member (2) and the thrust member enlargement portions (3 to 8) can be reset.

## Revendications

1. Procédé de fabrication de pièces de pâte présentant une surface et un profil d'épaisseur prédéterminés, selon lequel on dépose sur un support consistant en une plaque d'appui (9) une quantité de pâte correspondant à la pièce de pâte achevée, et on exerce une pression sur la pâte au moyen d'une matrice supérieure (1), de sorte que la pâte s'étale,
**caractérisé** en ce que la plaque d'appui (9) comporte tout d'abord une plaque centrale (10) ayant une première surface qui est inférieure à la surface prédéterminée, et la pâte est pressée sur la plaque d'appui (9) au moyen d'une matrice centrale (2) dont la surface correspond à la première surface, de sorte que la pâte s'étale et que sa surface augmente,
au bout d'un temps d'étalement prédéterminé, la surface de la matrice supérieure (1) et celle de la plaque d'appui (9) sont agrandies respectivement d'un premier élargissement de matrice (3) et d'un premier élargissement de plaque (11), et
une force de pression est exercée sur la pâte au moyen du premier élargissement de matrice (3), de sorte que la pâte s'étale et que sa surface augmente,
l'élargissement de la surface de la matrice supérieure (1) et de la plaque d'appui (9) ainsi que l'exercice de la force de pression étant répétés jusqu'à ce que la surface de la pâte corresponde à la surface prédéterminée.

2. Procédé selon la revendication 1, **caractérisé** en ce que le temps de pression et la force de pression des élargissements respectifs sont différents.

3. Procédé selon la revendication 1 ou 2, **caractérisé** en ce que l'abaissement de la matrice supérieure (1) sur la plaque d'appui (9) est limité à une distance minimale entre la matrice supérieure (1) et la plaque d'appui (9).

4. Dispositif pour la mise en oeuvre du procédé selon une des revendications 1 à 3, avec une plaque d'appui (9) et une matrice supérieure (1) pouvant être abaissée sur la plaque d'appui (9), la matrice supérieure (1) comportant une matrice centrale (2) ayant une première surface prédéterminée, tout autour de laquelle est disposé au moins un premier élargissement de matrice (3), qui peut être séparément abaissé,
**caractérisé** en ce que la plaque d'appui (9) comporte une plaque centrale (10) de surface prédéterminée, tout autour de laquelle est disposé au moins un premier élargissement de plaque (11), qui peut être séparément abaissé, la surface de la plaque centrale (10) correspondant à la surface de la matrice centrale (2) et les surfaces des élargissements de plaque (11 à 16) correspondant aux surfaces des élargissements de matrice (3 à 8), et l'abaissement s'effectuant de telle sorte que la surface de la plaque d'appui (9) correspond chaque fois à la surface de la matrice supérieure (1).

5. Dispositif selon la revendication 4, **caractérisé** en ce que la matrice centrale (2) est cylindrique et les élargissements de matrice (3 à 8) sont de forme cylindrique creuse.

6. Dispositif selon la revendication 4 ou 5, **caractérisé** en ce qu'une unité de commande est prévue, qui permet de régler le temps de pression et la force de pression.

7. Dispositif selon une des revendications 4 à 6, **caractérisé** en ce qu'une butée de limitation est prévue, qui permet de régler une distance minimale entre la matrice supérieure (1) et la plaque d'appui (9).

8. Dispositif selon une des revendications 4 à 7, **caractérisé** en ce qu'au moins la matrice supérieure (1) présente des moyens qui permettent de remettre à l'état initial la matrice centrale (2) et les élargissements de matrice (3 à 8).
